# EUROPÄISCHE PATENTANMELDUNG

(11) **EP 4 678 674 A1**
(43) Veröffentlichungstag der Anmeldung: **14.01.2026**
(21) Anmeldenummer: 24188424.6
(22) Anmeldetag: 12.07.2024
(51) Int. Cl.: C08G 18/10, C08G 18/38, C08G 18/48, C08G 18/75, C08G 18/76, C08G 59/14, C08L 63/00

(54) **MERCAPTO-FUNKTIONELLES ADDUKT VON TRIMERCAPTAN UND ISOCYANATGRUPPEN-HALTIGEM POLYMER**

(71) Anmelder: Sika Technology AG, 6340 Baar (CH)
(72) Erfinder: KASEMI, Edis, 8048 Zürich (CH); BURCKHARDT, Urs, 8048 Zürich (CH); ILLI, Tobias, 8048 Zürich (CH); KRAMER, Andreas, 8048 Zürich (CH); STADELMANN, Ursula, 8048 Zürich (CH)
(74) Vertreter: Sika Patent Attorneys

(57) **Zusammenfassung**

Gegenstand der Erfindung ist ein Mercapto-funktionelles Addukt aus der Umsetzung von mindestens einem Mercaptan **M** mit mindestens drei Mercaptogruppen mit mindestens einem Isocyanatgruppen-haltigen Polymer mit einem mittleren Molekulargewicht Mₙ von mindestens 1'000 g/mol in einem Verhältnis der Anzahl Mercaptogruppen zur Anzahl Isocyanatgruppen zu Beginn der Umsetzung von mindestens 4.

Das Addukt ermöglicht Epoxidharz-Klebstoffe mit guter Verarbeitbarkeit, schneller Aushärtung, guten Haftungseigenschaften und einer überraschenden Kombination aus hoher Festigkeit und hoher Schlagzähigkeit.

## Beschreibung

### Technisches Gebiet

Die Erfindung betrifft Mercapto-funktionelle Addukte aus der Umsetzung von Polymercaptanen mit Isocyanatgruppen-haltigen Polymeren und ihre Verwendung in härtbaren Zusammensetzungen, insbesondere in Klebstoffen, Dichtstoffen und Beschichtungen.

### Stand der Technik

Polymercaptane sind bekannt als Härter in härtbaren Zusammensetzungen, insbesondere in bei Raumtemperatur härtbaren Epoxidharz-Klebstoffen, wo sie eine besonders schnelle Aushärtung ermöglichen.

Epoxidharz-Klebstoffe ermöglichen hohe Haftkräfte auf unterschiedlichen Substraten. Sie sind aber typischerweise kaum dehnbar und wenig schlagzäh. Für Anwendungen, wo eine hohe Schlagzähigkeit der Verklebung gefordert ist oder wo starke Erschütterungen und Bewegungen auftreten, sind klassische Epxoidharz-Klebstoffe oft zu spröd. Für solche Anwendungen wurden sogenannt schlagzähmodifizierte (toughened) Epoxidharz-Produkte entwickelt, beispielsweise für Verklebungen an einer Fahrzeug-Karosserie mit hoher Crashfestigkeit. Dabei enthält der ausgehärtete Klebstoff als Schlagzähmodifikator bzw. Toughener fein verteilte, an die Epoxidharz-Matrix angebundene flexible Polymere, welche bei einem Crash mechanische Energie aufnehmen und dadurch die Rissfortpflanzung im Klebstoff stark reduzieren können. Bekannt als Toughener ist beispielsweise funktionalisierter flüssiger Gummi wie zum Beispiel ATBN (amine-terminated butadiene-acrylonitrile copolymer) oder ETBN (epoxy-terminated butadiene-acrylonitrile copolymer), wobei diese hochviskos und teuer sind und bei der Tieftemperaturflexibilität Nachteile aufweisen.

US 2021/0198537 beschreibt mittels einem toughened Epoxidharz-Klebstoff verklebte Metalle. Als Schlagzähmodifikator (Toughener) beschrieben sind unter anderem Polyurethane, insbesondere Isocyanatgruppen-haltige Polymere, welche mit einem Epoxidharz oder mit Cardanol blockiert sind. Solche Klebstoffe verfügen über eine hohe Kälteflexibilität. Die mittels Epoxidharz blockierten Toughener sind aber sehr hochviskos, und bei den mittels Cardanol blockierten Toughenern wird bei der Aushärtung Cardanol freigesetzt, welches im ausgehärteten Klebstoff unerwünscht weichmachend wirken und aus dem Klebstoff migrieren kann.

US 3,114,734 beschreibt die Umsetzung von Dimercaptanen mit Isocyanatgruppen-haltigen Polymeren und die Aushärtung der erhaltenen Addukte mittels Oxidation.

US 7'847'034 beschreibt die Umsetzung eines Dimercaptans mit Isocyanatgruppen-haltigen Polymeren und die Verwendung in Epoxidharz-Klebstoffen.

### Darstellung der Erfindung

Aufgabe der vorliegenden Erfindung ist es, einen als Schlagzähmodifikator für Epoxidharz-Klebstoffe einsetzbaren Härter zur Verfügung zu stellen, welcher die Nachteile des Standes der Technik in Bezug auf hohe Viskosität und freigesetzte Abspalter überwindet.

Überraschenderweise wird diese Aufgabe mit einem Mercapto-funktionellen Addukt wie in Anspruch 1 beschrieben gelöst. Das Addukt wird erhalten aus der Umsetzung von mindestens einem Mercaptan **M** mit mindestens drei Mercaptogruppen mit einem Isocyanatgruppen-haltigen Polymer.

Das erfindungsgemässe Addukt ist in einem einfachen Verfahren aus gut erhältlichen, preisgünstigen Grundstoffen herstellbar. Es ist lagerstabil und bei Raumtemperatur insbesondere flüssig und niedrigviskos. Es ist dadurch besonders einfach einsetzbar als Härter und/oder Schlagzähmodifikator für Epoxidharz-Zusammensetzungen, sowie als Härter für Zusammensetzungen mit weiteren gegenüber Mercaptogruppen reaktiven Reaktivgruppen, wie insbesondere Isocyanatgruppen, Acrylatgruppen oder aromatischen Aldehydgruppen.

Besonders geeignet ist das erfindungsgemässe Addukt als Bestandteil eines Härters für Epoxidharze. Das erfindungsgemässe Addukt ermöglicht dabei eine gute Verarbeitbarkeit, eine schnelle Aushärtung und eine überraschende Kombination aus hoher Festigkeit und hoher Schlagzähigkeit. Insbesondere ermöglicht es Epoxidharz-Klebstoffe mit überraschend hoher Schlagzähigkeit ohne nennenswerte Einbussen bei der Aushärtegeschwindigkeit, der Endhärte, der Zugfestigkeit, dem Elastizitätsmodul und den Haftungseigenschaften. Gegenüber entsprechenden Addukten mit Dimercaptan anstelle von Mercaptan **M** ermöglicht das erfindungsgemässe Addukt eine deutlich höhere Festigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Mercapto-funktionelles Addukt aus der Umsetzung von
- mindestens einem Mercaptan **M** mit mindestens drei Mercaptogruppen mit
- mindestens einem Isocyanatgruppen-haltigen Polymer mit einem mittleren Molekulargewicht Mₙ von mindestens 1'000 g/mol,

in einem Verhältnis der Anzahl Mercaptogruppen zur Anzahl Isocyanatgruppen zu Beginn der Umsetzung von mindestens 4.

Als "Molekulargewicht" wird die molare Masse (in Gramm pro Mol) eines Moleküls bezeichnet. Als "mittleres Molekulargewicht" wird das Zahlenmittel des Molekulargewichts Mₙ einer polydispersen Mischung von oligomeren oder polymeren Molekülen bezeichnet. Es wird mittels Gelpermeationschromatographie (GPC) gegen Polystyrol als Standard bestimmt.

Als "NCO-Gehalt" wird der Gehalt an Isocyanatgruppen in Gewichts-% bezeichnet. Als "Mercapto-Equivalentgewicht" wird die Masse einer Mercaptogruppen-haltigen Verbindung oder Zusammensetzung bezeichnet, die ein Mol-Equivalent Mercaptogruppen enthält. Es wird angegeben in der Masseinheit "g/eq".

Als "lagerstabil" wird ein Addukt oder eine Zusammensetzung bezeichnet, das oder die bei Raumtemperatur in einem geeigneten Gebinde während längerer Zeit, typischerweise während mindestens 3 Monaten bis zu 6 Monaten und mehr, aufbewahrt werden kann, ohne dass es sich in seinen Anwendungs- oder Gebrauchseigenschaften durch die Lagerung in einem für seinen Gebrauch relevanten Ausmass verändert.

Mit "Poly" beginnende Substanznamen wie Polyaldehyd, Polyisocyanat, Polyol, Polyepoxid oder Polyamin bezeichnen Substanzen, die formal zwei oder mehr der in ihrem Namen vorkommenden funktionellen Gruppen pro Molekül enthalten.

Als "primäre Amingruppe" wird eine Amingruppe bezeichnet, die an einen einzigen organischen Rest gebunden ist und zwei Wasserstoffatome trägt; als "sekundäre Amingruppe" wird eine Amingruppe bezeichnet, die an zwei organische Reste, welche auch gemeinsam Teil eines Rings sein können, gebunden ist und ein Wasserstoffatom trägt; und als "tertiäre Amingruppe" wird eine Amingruppe bezeichnet, die an drei organische Reste, welche auch zu zweit oder zu dritt Teil eines oder mehrerer Ringe sein können, gebunden ist und kein Wasserstoffatom trägt. Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Das gesamte Reaktionsprodukt aus der Umsetzung des Mercaptan **M** mit dem Isocyanatgruppen-haltigen Polymer wird in diesem Dokument als Mercapto-funktionelles Addukt bezeichnet. Es enthält typischerweise eine Mischung aus Mercapto-funktionellem Polymer und nicht umgesetztem Mercaptan **M.**

Das erfindungsgemässe Mercapto-funktionelle Addukt ist insbesondere frei von Isocyanatgruppen.

Das erfindungsgemässe Mercapto-funktionelle Addukt ist lagerstabil.

Im Fall eines Mercaptans **M** mit drei Mercaptogruppen und eines linearen Isocyanatgruppen-haltigen Polymers enthält das erfindungsgemässe Addukt neben nicht umgesetztem Mercaptan **M** hauptsächlich die folgenden Addukt-Moleküle der Formel (I) und (II), 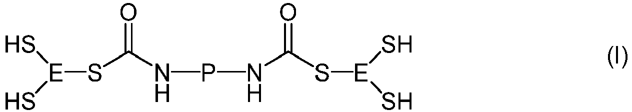 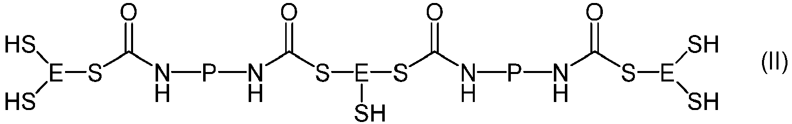 wobei P für den Rest des Isocyanatgruppen-haltigen Polymers nach Entfernung von zwei Isocyanatgruppen und E für den Rest des Mercaptans **M** nach Entfernung der drei Mercaptogruppen steht.

Ein Addukt-Molekül der Formel (I) wird auch als "Monoaddukt" bezeichnet. Es enthält nur einen Rest P. Ein Addukt-Molekül der Formel (II) wird auch als "Diaddukt" bezeichnet. Es enthält zwei Reste P. Zusätzlich enthält das Addukt auch höher adduktierte Bestandteile, bei welchen mehr als zwei Reste P über Mercaptan **M** adduktiert sind.

Ein hohes Verhältnis der Anzahl Mercaptogruppen zur Anzahl Isocyanatgruppen entspricht einem hohen Überschuss an Mercaptan **M** und begünstigt einen hohen Gehalt an Monoaddukt der Formel (I) und einen vergleichsweise hohen Gehalt an nicht umgesetztem Mercaptan **M.**

Ein geringeres Verhältnis der Anzahl Mercaptogruppen zur Anzahl Isocyanatgruppen entspricht einem geringeren Überschuss an Mercaptan **M** und begünstigt einen höheren Gehalt an höher adduktierten Bestandteilen und einen geringeren Gehalt an nicht umgesetztem Mercaptan **M.**

Bevorzugt liegt das Verhältnis der Anzahl Mercaptogruppen zur Anzahl Isocyanatgruppen zu Beginn der Umsetzung im Bereich von 4 bis 30, bevorzugt 4.5 bis 20, mehr bevorzugt 5 bis 10, insbesondere 6 bis 9. Ein solches Addukt ist besonders geeignet für die beschriebenen Verwendungen.

Im Fall eines Mercaptan **M** mit drei Mercaptogruppen liegt das Verhältnis bevorzugt bei 5 bis 10. Dies entspricht typischerweise einem Verhältnis der Anzahl Trimercaptan-Moleküle zur Anzahl Isocyanatgruppen von 1.7 bis 3.3.

Im Fall eines Mercaptan **M** mit vier Mercaptogruppen liegt das Verhältnis der Anzahl Mercaptogruppen zur Anzahl Isocyanatgruppen bevorzugt bei 5 bis 15, insbesondere bei 6.7 bis 13. Dies entspricht typischerweise einem Verhältnis der Anzahl Tetramercaptan-Moleküle zur Anzahl Isocyanatgruppen von 1.3 bis 3.8, insbesondere 1.7 bis 3.3.

Bevorzugt weist das Mercaptan **M** drei oder vier, insbesondere drei, Mercaptogruppen auf.

Bevorzugt weist das Mercaptan **M** ein Mercapto-Equivalentgewicht von 45 bis 400 g/eq, insbesondere 100 bis 300 g/eq, auf.

Bevorzugt ist das Mercaptan **M** frei von Hydroxylgruppen.

Bevorzugt ist das Mercaptan **M** ausgewählt ist aus der Liste bestehend aus Glycerol-tris(2-mercaptoacetat), Glycerol-tris(3-mercaptopropionat), Glycerol-tris(3-mercaptobutylat), 1,1,1-Trimethylolpropan-tris(2-mercaptoacetat), 1,1,1-Trimethylolpropan-tris(3-mercaptopropionat), 1,1,1-Trimethylolpropan-tris(3-mercaptobutyrat), Pentaerythritol-tris(2-mercaptoacetat), Pentaerythritol-tris(3-mercaptopropionat), Pentaerythritol-tris(3-mercaptobutyrat), Pentaerythritol-tetrakis(2-mercaptoacetat), Pentaerythritol-tetrakis(3-mercaptopropionat), Pentaerythritol-tetrakis(3-mercaptobutyrat), 3-Mercapto-2-hydroxypropylether von propoxyliertem Pentaerythritol mit einem mittleren Mercapto-Equivalentgewicht von 180 bis 400 g/eq, bevorzugt 180 bis 300 g/eq, Tris(2-(2-mercaptoacetyl-oxy)ethyl)isocyanurat, Tris(2-(3-mercaptopropionyloxy)ethyl)isocyanurat und Tris(2-(3-mercaptobutanoyloxy)ethyl)isocyanurat.

Davon bevorzugt sind Glycerol-tris(3-mercaptopropionat), 1,1,1-Trimethylolpropan-tris(2-mercaptoacetat), 1,1,1-Trimethylolpropan-tris(3-mercaptopropionat) oder 1,1,1-Trimethylolpropan-tris(3-mercaptobutyrat), insbesondere Trimethylolpropan-tris(3-mercaptopropionat).

Bevorzugt hat das Isocyanatgruppen-haltige Polymer ein mittleres Molekulargewicht Mₙ von 1'000 bis 15'000 g/mol, insbesondere 1'500 bis 10'000 g/mol.

Bevorzugt hat das Isocyanatgruppen-haltige Polymer einen NCO-Gehalt von 1 bis 9 Gewichts-%, bevorzugt 1.5 bis 6.5 Gewichts-%. Der NCO-Gehalt wird insbesondere bestimmt durch Umsetzung der Isocyanatgruppen mit einem Überschuss Dibutylamin und Rücktitration des nicht umgesetzten Dibutylamins mit wässriger Salzsäure.

Bevorzugt hat das Isocyanatgruppen-haltige Polymer eine mittlere Isocyanat-Funktionalität von 1.5 bis 4, besonders bevorzugt 1.7 bis 3, insbesondere 1.8 bis 2.0.

Bevorzugt weist das Isocyanatgruppen-haltige Polymer eine mittlere Isocyanat-Funktionalität von 1.7 bis 3, insbesondere 1.8 bis 2.0, und einen NCO-Gehalt von 1.5 bis 6.5 Gewichts-% auf.

Bevorzugt enthält das Isocyanatgruppen-haltige Polymer ein Polyether-, Polyester- oder Kohlenwasserstoff-Rückgrat, besonders bevorzugt ein Polyether- oder ein Kohlenwasserstoff-Rückgrat, am meisten bevorzugt ein Polyether-Rückgrat.

Als Polyether-Rückgrat bevorzugt ist ein Poly(oxy-1,4-butylen)- oder ein Poly(oxy-1,3-propylen)- oder ein Poly(oxy-1,2-propylen)-Rückgrat, wobei ein Poly(oxy-1,2-propylen)-Rückgrat zusätzlich Oxy-1,2-ethylen-Einheiten enthalten kann, insbesondere an den Kettenenden.

Bevorzugt ist das Isocyanatgruppen-haltige Polymer bei Raumtemperatur flüssig, insbesondere mit einer Viskosität bei 20 °C von 0.2 bis 500 Pa s, bevorzugt 0.5 bis 300 Pa s, insbesondere 1 bis 150 Pa s, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹.

Bevorzugt ist das Isocyanatgruppen-haltige Polymer ein Umsetzungsprodukt von mindestens einem monomeren Diisocyanat mit mindestens einem polymeren Polyol in einem molaren NCO/OH-Verhältnis von mindestens 1.5, bevorzugt mindestens 1.8, bevorzugt unter Ausschluss von Feuchtigkeit bei 20 bis 160 °C, insbesondere 40 bis 140 °C, gegebenenfalls in Anwesenheit eines geeigneten Katalysators.

Bevorzugt ist ein molares NCO/OH-Verhältnis von 1.5/1 bis 10/1, bevorzugt 1.8/1 bis 7/1, wobei nicht umgesetzte monomere Diisocyanate gegebenenfalls aus dem Polymer entfernt wurden.

In einer bevorzugten Ausführungsform der Erfindung liegt das molare NCO/OH-Verhältnis im Bereich von 1.5/1 bis 2.5/1, insbesondere 1.8/1 bis 2.2/1. Dabei werden nicht umgesetzte monomere Diisocyanate bevorzugt nicht aus dem Polymer entfernt. Ein solches erfindungsgemässes Addukt enthält typischerweise etwa 0.7 bis 5 Gewichts-% Umsetzungsprodukte aus monomerem Diisocyanat und Mercaptan **M.**

In einer weiteren bevorzugten Ausführungsform der Erfindung liegt das molare NCO/OH-Verhältnis im Bereich von 3/1 bis 10/1, insbesondere 4/1 bis 8/1. Dabei werden nicht umgesetzte monomere Diisocyanate bevorzugt mittels eines geeigneten Trennverfahrens, insbesondere mittels Destillation, aus dem erhaltenen Polymer entfernt, insbesondere bis auf einen Gehalt bezogen auf das Isocyanatgruppen-haltige Polymer von weniger als 0.5 Gewichts-%, bevorzugt weniger als 0.2 Gewichts-%. Bevorzugt wird das monomere Diisocyanat mittels Dünnfilmdestillation oder Kurzwegdestillation unter Vakuum aus dem erhaltenen Polymer entfernt.

Der Gehalt an monomerem Diisocyanat wird bevorzugt bestimmt mittels HPLC-Chromatografie nach vorgängiger Derivatisierung mittels N-Propyl-4-nitrobenzyl-amin mit 0.04 M Natriumacetat / Acetonitril als mobile Phase und Detektion mittels Photodiodenarray.

Ein solches Isocyanatgruppen-haltiges Polymer hat eine besonders enge Molekulargewichtsverteilung und eine besonders niedrige Viskosität. Es ermöglicht erfindungsgemässe Addukte mit einem besonders niedrigen Gehalt an Umsetzungsprodukten aus monomerem Diisocyanat und Mercaptan **M,** wobei ein solches Addukt Epoxidharz-Produkte mit besonders hoher Festigkeit und/oder Dehnbarkeit ermöglicht.

Bevorzugt ist das monomere Diisocyanat ausgewählt aus der Liste bestehend aus 1,6-Hexandiisocyanat (HDI), 2,2(4),4-Trimethyl-1,6-hexandiisocyanat (TMDI), 1-Methyl-2,4(6)-diisocyanatocyclohexan, Isophorondiisocyanat (IPDI), 4,4'-Diisocyanatodicyclohexylmethan, 4(2),4'-Diphenylmethandiisocyanat (MDI) und 2,4(6)-Toluendiisocyanat (TDI).

Besonders bevorzugt ist HDI, IPDI oder MDI, insbesondere bevorzugt ist IPDI oder MDI.

Als polymeres Polyol bevorzugt sind
- Polyetherpolyole, insbesondere Polyoxyalkylendiole oder Polyoxyalkylentriole, insbesondere Polymerisationsprodukte von 1,2-Propylenoxid, 1,2-Butylenoxid, 2,3-Butylenoxid, Oxetan oder Tetrahydrofuran, gegebenenfalls unter Mitverwendung von Ethylenoxid, wobei diese gegebenenfalls mittels einem Startermolekül mit zwei oder mehr aktiven Wasserstoffatomen polymerisiert sind. Bevorzugte Polyetherpolyole sind Poly(oxy-1,4-butylen)diole, auch Polytetrahydrofurane genannt, Poly(oxy-1,3-propylen)diole, Poly(oxy-1,2-propylen)diole, Poly(oxy-1,2-propylen)triole oder Ethylenoxid-terminierte (EO-endcapped) Poly-(oxy-1,2-propylen)diole oder -triole. Letztere werden dadurch erhalten, dass Poly(oxy-1,2-propylen)diole oder -triole nach Abschluss der Polypropoxylierungsreaktion mit Ethylenoxid weiter alkoxyliert werden und dadurch schliesslich primäre Hydroxylgruppen aufweisen. Sie enthalten insbesondere bis zu 25 Gewichts-% Oxy-1,2-ethylen-Einheiten bezogen auf das gesamte Polyol. Bevorzugte Polyetherpolyole weisen einen Ungesättigtheitsgrad von weniger als 0.02 mEq/g, insbesondere weniger als 0.01 mEq/g, auf.
- Polyesterpolyole aus der Polykondensation von Dicarbonsäuren mit zwei- oder dreiwertigen Alkoholen, insbesondere Adipinsäure, Sebacinsäure, Dodecandicarbonsäure oder eine Dimerfettsäure, mit Di- und/oder Triolen wie insbesondere 1,6-Hexandiol, Neopentylglykol, 1,3-Cyclohexandimethanol, 1,4-Cyclohexandimethanol, Trimethylolpropan, Glycerin oder Ricinusöl.
- Polyhydroxyfunktionelle Fette oder Öle, insbesondere natürliche Fette oder Öle, wie inbesondere Ricinusöl, Derivate von Ricinusöl oder auf Pflanzenöl basierende Polyole, wie beispielsweise unter dem Handelsnamen Sovermol^{®} (von BASF) erhältlich.
- Polyetherpolyesterpolyole.
- Polykohlenwasserstoffpolyole, insbesondere hydrierte Polybutadienpolyole.

Bevorzugt sind bei Raumtemperatur flüssige polymere Polyole.

Bevorzugt weist das polymere Polyol eine OH-Zahl von 12 bis 175 mg KOH/g, bevorzugt 18 bis 120 mg KOH/g, insbesondere 25 bis 60 mg KOH/g, auf.

Bevorzugt ist das polymere Polyol ausgewählt aus der Liste bestehend aus Polyetherpolyolen, Polyesterpolyolen und Kohlenwasserstoffpolyolen.

Bevorzugt sind Polyetherpolyole oder Polykohlenwasserstoffpolyole, insbesondere Polyetherpolyole.

Besonders bevorzugt sind Poly(oxy-1,4-butylen)diole, Poly(oxy-1,3-propylen)diole, Poly(oxy-1,2-propylen)diole, Poly(oxy-1,2-propylen)triole oder Ethylenoxid-terminierte (EO-endcapped) Poly(oxy-1,2-propylen)diole oder -triole.

Die Umsetzung des Mercaptan **M** mit dem Isocyanatgruppen-haltigen Polymer zum erfindungsgemässen Addukt erfolgt bevorzugt bei einer Temperatur von 10 bis 100 °C, insbesondere 15 bis 80 °C, bevorzugt in Anwesenheit eines basischen Katalysators wie beispielsweise Triethylamin.

Bevorzugt wird das Mercaptan **M** vorgelegt und das Isocyanatgruppen-haltige Polymer unter gutem Rühren langsam zudosiert. Ebenfalls möglich ist eine Herstellung, bei welcher das Mercaptan **M** und das Isocyanatgruppen-haltige Polymer vermischt werden und anschliessend ein basischer Katalysator zugegeben wird. Weiterhin möglich ist die Umsetzung zum Addukt in einem kontinuierlichen Verfahren.

Die Umsetzung ist abgeschlossen, wenn das Reaktionsprodukt frei ist von Isocyanatgruppen. Die Abnahme des Gehalts an Isocyanatgruppen kann insbesondere titrimetrisch oder mittels Infrarotspektroskopie verfolgt werden. Bevorzugt erfolgt die Umsetzung ohne Mitverwendung von organischen Lösemitteln.

Aus der Umsetzung wird das erfindungsgemässe Mercapto-funktionelle Addukt erhalten. Es enthält wie bereits erwähnt ein Gemisch aus nicht umgesetztem Mercaptan **M** und adduktierten Molekülen, bei welchen Mercaptan **M** über Thiourethan-Bindungen an Isocyanatgruppen adduktiert sind.

Die Art des eingesetzten Isocyanatgruppen-haltigen Polymers und das Verhältnis der Anzahl Mercaptogruppen zur Anzahl Isocyanatgruppen bestimmen hauptsächlich die Zusammensetzung des erhaltenen Addukts. Ein Isocyanatgruppen-haltiges Polymer mit einer Isocyanat-Funktionalität von mehr als zwei führt zu einer hohen Mercapto-Funktionalität des Addukts. Weiterhin ergibt ein Isocyanatgruppen-haltiges Polymer mit einer breiten Verteilung der Molmasse und einem hohen Gehalt an monomeren Diisocyanaten ein Addukt mit einer anderen Zusammensetzung als ein Isocyanatgruppen-haltiges Polymer mit einer engen Verteilung der Molmasse und einem niedrigen Gehalt an monomeren Diisocyanaten. Die Eigenschaften des erfindungsgemässen Addukts können somit durch Variation des Mercaptans **M,** des eingesetzten Isocyanatgruppen-haltigen Polymers und des stöchiometrischen Verhältnisses bei der Umsetzung gezielt beeinflusst werden.

Überraschenderweise hat sich gezeigt, dass ein Addukt ausgehend von einem Mercaptan **M** mit mindestens drei Mercaptogruppen bei der Verwendung in Epoxidharz-Zusammensetzungen eine besonders hohe Festigkeit und Schlagzähigkeit ermöglicht.

Bevorzugt enthält das erfindungsgemässe Addukt bezogen auf 100 Gewichtsteile Reaktionsprodukt aus Mercaptan **M** und Isocyanatgruppen-haltigem Polymer weniger als 5 Gewichtsteile, bevorzugt weniger als 1 Gewichtsteil, insbesondere weniger 0.5 Gewichtsteile, flüchtige organische Lösemittel mit einem Siedepunkt bei Normaldruck von weniger als 250 °C. Eine solches Addukt verursacht besonders wenig Emissionen.

Bevorzugt ist das Addukt bei Raumtemperatur flüssig und niedrigviskos. Insbesondere hat das Addukt eine Viskosität bei 20 °C von 1 bis 500 Pa·s, bevorzugt 2 bis 3000 Pa·s, insbesondere 3 bis 250 Pa·s, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹.

Bevorzugt weist das erfindungsgemässe Addukt ein mittleres Mercapto-Equivalentgewicht von 150 bis 1'500 g/eq, insbesondere 200 bis 1'000 g/eq, auf. Dabei kann das Mercapto-Equivalentgewicht aus dem Mercapto-Equivalentgewicht des eingesetzten Mercaptans **M** und dem NCO-Gehalt des Isocyanatgruppen-haltigen Polymers berechnet werden, oder es wird mit einer geeigneten Analysenmethode bestimmt.

Das erfindungsgemässe Mercapto-funktionelle Addukt ist vorteilhaft verwendbar zum Aushärten von Verbindungen mit mindestens zwei gegenüber Mercaptogruppen reaktiven Reaktivgruppen.

Weiterhin verwendbar ist das erfindungsgemässe Mercapto-funktionelle Addukt, indem es mittels eines geeigneten Katalysators unter Oxidation und Bildung von Disulfidgruppen ausgehärtet wird.

Ein weiterer Gegenstand der Erfindung ist die Verwendung des erfindungsgemässen Mercapto-funktionellen Addukts als Härter in einer härtbaren Zusammensetzung enthaltend Reaktivgruppen ausgewählt aus Epoxidgruppe, Isocyanatgruppe, Aldehydgruppe, Vinylgruppe, Allylgruppe, Acrylatgruppe und Methacrylatgruppe.

Als Aldehydgruppe bevorzugt sind aromatische Aldehydgruppen, welche an ein aromatisches oder heteroaromatisches C-Atom gebunden sind. Bevorzugt sind Polyaldehyde mit zwei oder mehr Aldehydgruppen, wie insbesondere Terephthalaldehyd, Isophthalaldehyd oder Phthalaldehyd, oder Umsetzungsprodukte von Polyisocyanaten, insbesondere Isocyanatgruppen-haltigen Polymeren, mit Hydroxyaldehyden wie insbesondere 5-Hydroxymethylfurfural, ethoxyliertes Salicylaldehyd, insbesondere 2-(2-Hydroxyethoxy)benzaldehyd, oder ethoxyliertes Vanillin, insbesondere 4-(2-Hydroxyethoxy)-3-methoxybenzaldehyd. Solche härtbare Zusammensetzungen härten mit dem erfindungsgemässen Addukt in Gegenwart eines sauren Katalysators wie beispielsweise p-Dodecylbenzolsulfonsäure unter Ausbildung von Thioacetalgruppen zu einem festen Polymer aus.

Besonders bevorzugt wird das erfindungsgemässe Addukt eingesetzt in einer härtbaren Zusammensetzung enthaltend Epoxidgruppen. Es ermöglicht dabei flexibilisierte oder schlagzäh-modifizierte Epoxidharz-Produkte mit guter Verarbeitbarkeit bei Umgebungstemperaturen, schneller Aushärtung und hoher Endhärte und Festigkeit.

Ein weiterer Gegenstand der Erfindung ist somit eine Epoxidharz-Zusammensetzung umfassend mindestens ein Epoxidharz und mindestens einen Härter für Epoxidharze enthaltend mindestens ein Mercapto-funktionelles Addukt wie vorgängig beschrieben.

Ein geeignetes Epoxidharz wird insbesondere erhalten aus der Reaktion von Epichlorhydrin mit Polyolen, Polyphenolen oder Aminen oder aus der Oxidation von Olefinen.

Bevorzugt sind aromatische Epoxidharze, insbesondere die Glycidylether von
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan,
- Dihydroxybenzol-Derivaten wie Resorcin, Hydrochinon oder Brenzkatechin,
- weiteren Bisphenolen oder Polyphenolen wie Bis(4-hydroxy-3-methylphenyl)-methan, 2,2-Bis(4-hydroxy-3-methylphenyl)propan (Bisphenol C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol Z), 1,1-Bis(4-hydroxyphenyl)-3,3,5-trimethylcyclohexan (Bisphenol TMC), 1,1-Bis(4-hydroxyphenyl)-1-phenylethan, 1,4-Bis[2-(4-hydroxyphenyl)-2-propyl]-benzol (Bisphenol P), 1,3-Bis[2-(4-hydroxyphenyl)-2-propyl]benzol (Bisphenol M), 4,4'-Dihydroxydiphenyl (DOD), 4,4'-Dihydroxybenzophenon, Bis(2-hydroxy-naphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon,
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind,
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin P) oder 4,4'-[1,3-Phenylen-bis(1-methylethyliden)]bisanilin (Bisanilin M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol A-, F- oder A/F-Flüssigharz, beziehungsweise die Glycidylisierungsprodukte von hydriertem Bisphenol A, F oder A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere geeignete Epoxidharze sind solche aus der Umsetzung von biobasierten hydroxyfunktionellen Rohstoffen mit Epichlorhydrin, insbesondere Vanillin-basierte Epoxidharze wie insbesondere Diglycidylether von Vanillinalkohol, oder Glycerolbasierte Epoxidharze.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls werden zusätzlich Anteile von Epoxid-Festharz mitverwendet.

Als Epoxidharz bevorzugt sind aromatische Epoxid-Flüssigharze, insbesondere Bisphenol A-Diglycidylether, Bisphenol F-Diglycidylether oder Phenol-Formaldehyd Novolak-Glycidylether, oder Mischungen davon, insbesondere ein Gemisch aus Bisphenol A-Diglycidylether und Bisphenol F-Diglycidylether. Solche Epoxidharze sind sehr reaktiv, hydrophob und weisen eine für Epoxidharze niedrige Viskosität auf. Sie ermöglichen eine gute Verarbeitbarkeit, eine schnelle Aushärtung und hohe Haftkräfte.

Bevorzugt sind aromatische Epoxid-Flüssigharz mit einem mittleren Epoxid-Equivalentgewicht von 150 bis 250 g/eq.

Zusätzlich zum Epoxidharz kann mindestens ein Epoxidgruppen-haltiger Reaktivverdünner enthalten sein.

Dafür geeignet sind insbesondere 1,4-Butandioldiglycidylether, 1,6-Hexandioldiglycidylether, Trimethylolpropandi- oder -triglycidylether, Phenylglycidylether, Kresylglycidylether, Guajacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt als Reaktivverdünner ist 1,4-Butandioldiglycidylether, 1,6-Hexandioldiglycidylether oder p-tert.Butylphenylglycidylether.

Der Härter für Epoxidharze enthält das erfindungsgemässe Mercapto-funktionelle Addukt.

Zusätzlich enthält der Härter bevorzugt mindestens ein Polyamin mit mindestens 3 Aminwasserstoffen. Ein solcher Härter ermöglicht flexibilisierte oder schlagzäh-modifizierte Epoxidharz-Produkte von sehr hoher Festigkeit.

Geeignet als Polyamin mit mindestens 3 Aminwasserstoffen sind handelsübliche Polyamine mit aliphatisch gebundenen Amingruppen, wie sie üblicherweise zum Aushärten von Epoxidharzen eingesetzt werden, wie insbesondere 1,5-Diamino-2-methylpentan (MPMD), 1,6-Hexandiamin, 2,2(4),4-Trimethyl-1,6-hexandiamin (TMD), 2-Butyl-2-ethyl-1,5-pentandiamin (C11-Neodiamin), Isophorondiamin (IPDA), 1,3-Bis(aminomethyl)benzol (MXDA), 1,4-Bis(aminomethyl)benzol, 2,5-Bis(aminomethyl)furan, 2,5-Bis(aminomethyl)tetrahydrofuran, 1,3-Bis(aminomethyl)cyclohexan (BAC), 1,4-Bis(aminomethyl)cyclohexan, Bis(4-aminocyclohexyl)-methan, 1,2-Diaminocyclohexan (DACH), 1,3-Diaminocyclohexan, 1,4-Diaminocyclohexan, 2(4)-Methyl-1,3-diaminocyclohexan (MCDA), 2,5(2,6)-Bis(aminomethyl)bicyclo[2.2.1]heptan (NBDA), N-Benzyl-1,2-ethandiamin, N-Furfuryl-1,2-ethan-diamin, N-Tetrahydrofurfuryl-1,2-ethandiamin, Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)1,2-ethandiamin (N4-Amin), Bis(1,6-hexylen)triamin (BHMT), N-3-Benzylaminopropyl-N'-3-amino-propyl-1,2-ethandiamin,, 3-(3-(Dimethylamino)propylamino)propylamin (DMAPAPA), Polyetheramine wie Bis(2-aminoethyl)ether, 3,6-Dioxaoctan-1,8-diamin, 4,7-Dioxadecan-1,10-diamin, 4,7-Dioxadecan-2,9-diamin, 4,9-Dioxa-dodecan-1,12-diamin, 5,8-Dioxadodecan-3,10-diamin, 4,7,10-Trioxatridecan-1,13-diamin oder die als Jeffamine^{®} D-230, D-400 oder T-403 von Huntsman erhältlichen Poly(oxy-1,2-propylen)di- oder -triamine sowie entsprechende Typen von BASF oder Nitroil, Phenalkamine oder -amide, welche Umsetzungsprodukte von Cardanol mit Aldehyden, insbesondere Formaldehyd, und Polyaminen darstellen, aminfunktionelle Addukte der genannten Amine mit Epoxiden, sowie eine Kombinationen aus zwei oder mehr dieser Amine.

Davon bevorzugt sind IPDA, MXDA, BAC, N-Benzyl-1,2-ethandiamin, N-3-Benzyl-aminopropyl-N'-3-aminopropyl-1,2-ethandiamin, Polyetheramine, Phenalkamine oder ein aminfunktionelles Addukt von N-Benzyl-1,2-ethandiamin mit einem Epoxidharz, insbesondere einem Bisphenol A-Diglycidlyether.

Die Epoxidharz-Zusammensetzung kann weitere Bestandteile enthalten, insbesondere
- weitere Amine, insbesondere Amine mit zwei Aminwasserstoffen wie insbesondere N,N'-Dibenzyl-1,2-ethandiamin, Monoamine wie insbesondere Benzylamin oder Furfurylamin, Polyamidoamine wie insbesondere Umsetzungsprodukte aus Dimerfettsäuren mit DETA, TETA oder TEPA, Mannich-Basen oder aromatische Polyamine wie insbesondere 4(2),4'-Diaminodiphenylmethan oder 2,4(6)-Toluoldiamin,
- weitere Mercaptogruppen aufweisende Verbindungen, insbesondere Dimercaptane, Mercaptan-terminierte Polysulfidpolymere, Mercaptan-terminierte Polyoxyalkylenether oder Polyester von Thiocarbonsäuren,
- weitere Schlagzähmodifikatoren mit Epoxidgruppen oder Amingruppen, wie insbesondere aminfunktionelle Butadiene oder Umsetzungsprodukte von hydrophoben Polyolen oder Isocyanatgruppen-haltigen Polymeren mit Epoxidharzen,
- weitere Reaktivverdünner, insbesondere epoxidiertes Sojaöl oder Leinöl, Acetoacetatgruppen aufweisende Verbindungen, Butyrolakton, Carbonate, Aldehyde, Isocyanate oder Reaktivgruppen aufweisende Silikone,
- Beschleuniger für die Aushärtung, insbesondere Phenole, Phenol-Harze oder Mannich-Basen wie insbesondere 2,4,6-Tris(dimethylaminomethyl)phenol, organische Carbonsäuren wie Salicylsäure oder 2-Nitrobenzoesäure, organische Sulfonsäuren wie Methansulfonsäure, p-Toluolsulfonsäure oder 4-Dodecylbenzolsulfonsäure, Nitrate wie insbesondere Calciumnitrat, tertiäre Amine, Imidazole, Ammoniumsalze, Amidine oder Guanidine,
- Füllstoffe, insbesondere gemahlenes oder gefälltes Calciumcarbonat, welches gegebenenfalls mit Fettsäure, insbesondere Stearaten, beschichtet ist, Baryt, Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminiumhydroxid, Magnesiumhydroxid, Kieselsäure, pyrogene Kieselsäure, Zement, Gips, Flugasche, Russ, Graphit, gemahlene Füllstoffe aus landwirtschaftlichen Quellen wie insbesondere Olivenkernmehl oder Nussschalenmehl, Hohlkugeln insbesondere Glaskugeln, Metall-Pulver wie Aluminium, Kupfer, Eisen, Zink, Silber oder Stahl, oder PVC-Pulver,
- Pigmente, wie insbesondere Titandioxide, Eisenoxide, Chrom(III)oxide, organische Pigmente, Russ oder Korrosionsschutzpigmente wie insbesondere Phosphate, Orthophosphate oder Polyphosphate, welche als Gegenion insbesondere Chrom, Zink, Aluminium, Kalzium, Strontium oder eine Kombination dieser Metalle enthalten,
- oberflächenaktive Additive, insbesondere Entschäumer, Entlüfter, Netzmittel, Dispergiermittel, Verlaufsmittel oder dispergierte Paraffinwachse,
- Lösemittel oder Verdünner, wie insbesondere Benzylalkohol, styrolisiertes Phenol, 2-Phenoxyethanol, 2-Benzyloxyethanol, phenolgruppenhaltige aromatische Kohlenwasserstoffharze, Diisopropylnaphthalin, Isopropylbiphenyle, Cardanol oder Phenol-Formaldehyd-Novolake,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern oder Kunststofffasern wie Polyamidfasern oder Polyethylenfasern,
- Nanofüllstoffe, insbesondere Carbon Nanotubes,
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine, oder
- Stabilisatoren gegen Oxidation, Wärme, Licht oder UV-Strahlung oder Biozide.

Bevorzugt enthält die Epoxidharz-Zusammensetzung weniger als 5 Gewichts-%, insbesondere weniger als 1 Gewichts-%, organische Lösemittel mit einem Siedepunkt bei Normaldruck von weniger als 250 °C bezogen auf die gesamte Epoxidharz-Zusammensetzung.

Bevorzugt enthält die Epoxidharz-Zusammensetzung weniger als 5 Gewichts-%, Wasser bezogen auf die gesamte Epoxidharz-Zusammensetzung.

Bevorzugt liegt das molare Verhältnis der Summe aus Aminwasserstoffen und Mercaptogruppen zu den Epoxidgruppen in der Epoxidharz-Zusammensetzung im Bereich von 0.5 bis 1.5, insbesondere 0.8 bis 1.2.

Bevorzugt liegt das erfindungsgemässe Mercapto-funktionelle Addukt in der Epoxidharz-Zusammensetzung in einer solchen Menge vor, dass das Gewichtsverhältnis zwischen dem Mercapto-funktionellen Addukt und Epoxidharzen im Bereich von 5/95 bis 70/30, bevorzugt 7/93 bis 50/50, insbesondere 10/90 bis 35/65, liegt. Eine solche Epoxidharz-Zusammensetzung verfügt über eine hohe Härte, hohe Festigkeit und gute Schlagzähigkeit.

Bevorzugt umfasst die Epoxidharz-Zusammensetzung eine Harz-Komponente und eine Härter-Komponente, welche jeweils für sich allein lagerstabil sind und in voneinander getrennten Gebinden gelagert werden. Zum Gebrauch der Epoxidharz-Zusammensetzung werden, die Harz- und die Härter-Komponente kurz vor oder während der Applikation miteinander vermischt, womit die Aushärtung beginnt.

Dabei umfasst die Harz-Komponente mindestens ein Epoxidharz, gegebenenfalls mindestens einen Epoxidgruppen-haltigen Reaktivverdünner und gegebenenfalls weitere mit Aminwasserstoffen oder Mercaptogruppen reaktive Bestandteile, die Härter-Komponente umfasst das erfindungsgemässe Mercapto-funktionelle Addukt und gegebenenfalls weitere mit Epoxidgruppen reaktive Bestandteile wie insbesondere mindestens ein Polyamin mit mindestens drei Aminwasserstoffen. Weitere Bestandteile der Epoxidharz-Zusammensetzung wie insbesondere Füllstoffe, Pigmente, Beschleuniger oder oberflächenaktive Additive können als Bestandteil der Harz- oder der Härter-Komponente oder als Bestandteil der Harz- und der Härter-Komponente vorliegen.

Die Harz- und die Härter-Komponente der Epoxidharz-Zusammensetzung werden in voneinander getrennten Gebinden gelagert.

Ein geeignetes Gebinde zum Lagern der Harz- oder der Härter-Komponente ist insbesondere ein Fass, ein Hobbock, ein Beutel, ein Eimer, eine Büchse, eine

Kartusche oder eine Tube. Die Komponenten sind lagerfähig, das heisst, sie können vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.8 bis 1.2, liegt. In Gewichtsteilen liegt das Mischungsverhältnis zwischen der Harz- und der Härter-Komponente typischerweise im Bereich von 1:2 bis 20:1.

Das Vermischen der Komponenten erfolgt mittels eines geeigneten Verfahrens, insbesondere mittels Statikmischer oder einem dynamischen Mischer. Das Vermischen kann kontinuierlich oder batchweise erfolgen.

Das Mischen und die Applikation können bei Umgebungstemperatur erfolgen, welche typischerweise im Bereich von 5 bis 45 °C, bevorzugt bei 10 bis 35 °C, liegt.

Erfolgt das Mischen der Komponenten vor der Applikation, so muss darauf geachtet werden, dass zwischen dem Mischen der Komponenten und der Applikation nicht zu viel Zeit vergeht und die Applikation innerhalb der Topfzeit erfolgt.

Mit dem Mischen der Inhaltsstoffe beziehungsweise der Komponenten beginnt die Aushärtung der Epoxidharz-Zusammensetzung durch chemische Reaktion. Die Mercaptogruppen des erfindungsgemässen Addukts, die Aminwasserstoffe von gegebenenfalls vorhandenen Aminen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie und gegebenenfalls vorhandenen Beschleunigern ab.

Die Aushärtung kann bei Umgebungsbedingungen erfolgen, insbesondere bei 5 bis 45 °C, bevorzugt bei 10 bis 35 °C, oder sie kann durch Erwärmen beschleunigt und/oder vervollständigt werden, insbesondere durch Erwärmen auf eine Temperatur von 50 bis 130 °C, bevorzugt 70 bis 120 °C, bevorzugt während 5 Minuten bis 24 Stunden, insbesondere während 30 Minuten bis 4 Stunden.

Die Applikation der Epoxidharz-Zusammensetzung erfolgt bevorzugt auf mindestens ein Substrat.

Geeignete Substrate sind insbesondere
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Applikation und Aushärtung wird die ausgehärtete Epoxidharz-Zusammensetzung erhalten. Diese zeichnet sich durch eine hohe Härte und hohe Festigkeit aus, bei hoher Schlagzähigkeit oder hoher Flexibilität.

Die Epoxidharz-Zusammensetzung eignet sich für eine Vielzahl von Verwendungen. Sie insbesondere geeignet als Klebstoff, Giessharz, Beschichtung oder Spachtelmasse.

Besonders geeignet ist die Epoxidharz-Zusammensetzung als Klebstoff.

Ein solcher Epoxidharz-Klebstoff ist besonders geeignet für Verklebungen, bei welchen eine hohe Festigkeit und hohe Schlagzähigkeit oder Crashfestigkeit gefordert ist.

Der Epoxidharz-Klebstoff hat bevorzugt eine pastöse Konsistenz.

Bevorzugt lässt sich der Klebstoff aus einer Doppelkartusche mit getrennten Kammern für die Harz- und die Härter-Komponente durch einen aufgesetzten Statikmischer applizieren. Dabei ist es vorteilhaft, wenn der Klebstoff eine niedrige Viskosität aufweist. Weiterhin bevorzugt weist ein solcher Klebstoff ein Mischungsverhältnis in Volumen zwischen der Harz- und der Härter-Komponente von 1:1 auf. Ein solcher Klebstoff ist besonders einfach mittels Doppelkartusche und aufgesetztem Statikmischer verarbeitbar.

Das erfindungsgemässe Addukt ermöglicht Epoxidharz-Zusammensetzungen, insbesondere Epoxidharz-Klebstoffe, mit sehr guter Verarbeitbarkeit, schneller Aushärtung, guten Haftungseigenschaften und einer überraschenden Kombination aus hoher Endfestigkeit und hoher Schlagzähigkeit oder Flexibilität.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 10 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

Der **Gehalt an monomerem Diisocyanat** wurde mittels HPLC (Detektion über Photodiodenarray; 0.04 M Natriumacetat / Acetonitril als mobile Phase) nach vorgängiger Derivation mittels N-Propyl-4-nitrobenzylamin bestimmt.

### Verwendete Substanzen und Abkürzungen:

| | |
|---|---|
| TMPMP: | 1,1,1-Trimethylolpropan-tris(3-mercaptopropionat) technisch, 138 g/eq SH (Thiocure^{®} TMPMP, von Bruno Bock GmbH) |
| GDMP: | Ethylenglykoldi(3-mercaptopropionat) technisch, 123.5 g/eq SH (Thiocure^{®} GDMP, von Bruno Bock GmbH) |
| DMDO: | 1,8-Dimercapto-3,6-dioxaoctan, 182.3 g/mol, 91.1 g/eq SH |
| BADGE: | Bisphenol A-Diglycidylether (Araldite^{®} GY-250, EEW 188 g/eq, von Huntsman) |
| K54: | 2,4,6-Tris(dimethylaminomethyl)phenol (Ancamine^{®} K54, von Evonik) |
| MXDA: | 1,3-Bis(aminomethyl)benzol, AHEW 34 g/eq (von Mitsubishi Gas Chem.) |

### Herstellung von Isocyanatgruppen-haltigen Polymeren:

### Polymer P1:

600 g Polyoxypropylendiol (Voranol^{®} 1010 L, OH-Zahl 112 mg KOH/g, von Dow) und 533.3 g Isophorondiisocyanat (Vestanat^{®} IPDI, von Evonik) wurden bei 80 °C nach bekanntem Verfahren zu einer Reaktionsmischung mit einem NCO-Gehalt von 15.6 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einem NCO-Gehalt von 5.0 Gewichts-% und einem Gehalt an monomerem Isophorondiisocyanat von 0.03 Gewichts-% erhalten wurde.

### Polymer P2:

600 g Polyoxypropylendiol (Voranol^{®} 1010 L, OH-Zahl 112 mg KOH/g, von Dow) und 266.6 g Isophorondiisocyanat (Vestanat^{®} IPDI, von Evonik) wurden bei 80 °C nach bekanntem Verfahren zu einer Reaktionsmischung mit einem NCO-Gehalt von 5.1 Gewichts-% umgesetzt.

### Polymer P3:

780 g Ethylenoxid-terminiertes Polyoxypropylentriol (Desmophen^{®} 5031 BT, OH-Zahl 28.0 mg KOH/g, OH-Funktionalität ca. 2.3, von Covestro) und 303 g Isophorondiisocyanat (Vestanat^{®} IPDI, von Evonik) wurden bei 80 °C nach bekanntem Verfahren zu einer Reaktionsmischung mit einem NCO-Gehalt von 9.1 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einem NCO-Gehalt von 1.8 Gewichts-% und einem Gehalt an monomerem Isophorondiisocyanat von 0.02 Gewichts-% erhalten wurde.

### Polymer P4:

725 g Ethylenoxid-terminiertes Polyoxypropylentriol (Desmophen^{®} 5031 BT, OH-Zahl 28.0 mg KOH/g, OH-Funktionalität ca. 2.3, von Covestro) und 275 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Polymer mit einem NCO-Gehalt von 1.6 Gewichts-% und einen Gehalt an monomerem 4,4'-Diphenylmethandiisocyanat von 0.04 Gewichts-% erhalten wurde.

### Herstellung von Mercapto-funktionellen Addukten:

### Addukte S1 bis S3 und R1 bis R2:

Die in Tabelle 1 angegebene Menge (in Gramm) des angegebenen Polymercaptans wurde in Gegenwart von 2 Tropfen Triethylamin bei Raumtemperatur unter Ausschluss von Feuchtigkeit mit der angegebenen Menge (in Gramm) des angegebenen Isocyanatgruppen-haltigen Polymers umgesetzt, bis mittels IR-Spektroskopie keine Isocyanatgruppen mehr nachweisbar waren.

Die Eigenschaften der Addukte sind in Tabelle 1 angegeben.

Die mit **"(Ref.)"** bezeichnete Addukte **R1** und **R2** dienen als Vergleichsbeispiele. Sie sind jeweils hergestellt mit einem Dimercaptan.

**Tabelle 1: Mercapto-funktionelle Addukte S1 bis S3 und R1 bis R2.**

| **Addukt** | **S1** | **R1 (Ref.)** | **R2 (Ref.)** | **S2** | **S3** |
|---|---|---|---|---|---|
| Polymer **P1** | 100.0 | 100.0 | 100.0 | - | - |
| Polymer **P2** | - | - | - | 100.0 | - |
| Polymer **P3** | - | - | - | - | 100.0 |
| TMPMP | 123.0 | - | - | 125.7 | 44.4 |
| GDMP | - | 73.5 | - | - | - |
| DMDO | - | - | 54.2 | - | - |
| Viskosität (20°C) [Pa·s] | 61.2 | 10.4 | 4.4 | 81.2 | 66 |
| Verhältnis SH / NCO ¹ | 7.5 | 5.0 | 5.0 | 7.5 | 7.5 |
| Verhältnis Mercaptan / NCO ² | 2.5 | 2.5 | 2.5 | 2.5 | 2.5 |
| SH-Equivalentgewicht ³ [g/eq] | 289 | 364 | 324 | 286 | 518 |

| | | | | | |
|---|---|---|---|---|---|
| ¹ Verhältnis der Anzahl Mercaptogruppen zur Anzahl Isocyanatgruppen ² Verhältnis der Anzahl Mercaptanmoleküle zur Anzahl Isocyanatgruppen ³ berechnet | | | | | |

### Verwendung in Epoxidharz-Zusammensetzungen,

### Zusammensetzungen Z1 bis Z4:

Für jede Zusammensetzung wurde die in Tabelle 2 angegebene Menge Bisphenol A-Diglycidylether (in Gewichtsteilen) als Harz-Komponente eingesetzt. Weiterhin wurden die in Tabelle 2 angegebenen Inhaltsstoffe der Härter-Komponente in den angegebenen Mengen (in Gewichtsteilen) vermischt und unter Ausschluss von Feuchtigkeit aufbewahrt.

Anschliessend wurden die beiden Komponenten jeder Zusammensetzung mittels eines Zentrifugalmischers zu einer homogenen Flüssigkeit verarbeitet und diese unverzüglich folgendermassen geprüft:
Die **Gelierzeit** wurde bestimmt, indem eine frisch vermischte Menge von ca. 3 g im Normklima mit einem Spatel in regelmässigen Abständen bewegt wurde, bis die Masse gelierte.

Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima gelagert, einige hantelförmige Prüfkörper (Länge 75 mm, Steglänge 30 mm, Stegbreite 4 mm) aus dem Film ausgestanzt und diese gemäss DIN EN 53504 bei einer Zuggeschwindigkeit von 200 mm/min auf **Zugfestigkeit, Bruchdehnung** und **E-Modul 5%** (bei 0.5-5% geprüft. Weiter wurden einige Prüfkörper zur Bestimmung der **Weiterreissfestigkeit** ausgestanzt und gemäss DIN ISO 34-1, Verfahren B (winkelförmiger Prüfkörper) bei einer Zuggeschwindigkeit von 500 mm/min geprüft.

Die **Shore A**-Härte wurde nach DIN 53505 an während 7 Tagen im Normklima gehärteten Prüfkörpern bestimmt. Diese Resultate sind mit dem Zusatz "**7d NK**" versehen. Zur Bestimmung der Hitze- und Hydrolysestabilität wurden weitere Shore A-Prüfkörper nach 7 Tagen Aushärtung im Normklima entweder zusätzlich während 7 Tagen bei 70 °C und 100 % relativer Feuchtigkeit gelagert oder zusätzlich während 7 Tagen in einem Umluftofen bei 100 °C gelagert und nach Abkühlen auf Raumtemperatur jeweils wie beschrieben die Shore A-Härte bestimmt. Diese Resultate sind mit dem Zusatz **"+7d 70/100"** bzw. **"+7d 100°C"** versehen.

Die Resultate sind in Tabelle 2 angegeben.

Die mit "**(Ref.)**" bezeichneten Zusammensetzungen sind Vergleichsbeispiele.

**Tabelle 2: Zusammensetzung und Eigenschaften von Z1 bis Z4.**

| **Zusammensetzung** | | **Z1** | **Z2 (Ref.)** | **Z3 (Ref.)** | **Z4** |
|---|---|---|---|---|---|
| **Harz-Komponente:** | | | | | |
| | BADGE | 188 | 188 | 188 | 188 |

| **Härter-Komponente:** | | | | | |
|---|---|---|---|---|---|
| | Addukt | **S1** | **R1** | **R2** | **S2** |
| | | 289 | 364 | 324 | 286 |
| | K54 | 2.3 | 2.3 | 2.3 | 2.3 |
| Gelierzeit [min] | | 75 | 195 | 100 | 60 |
| Zugfestigkeit [MPa] | | 17.5 | 5.5 | 7.4 | 11.7 |
| Bruchdehnung [%] | | 150 | 400 | 325 | 125 |
| E-Modul 5% [MPa] | | 46.5 | 4.2 | 4.0 | 14.3 |
| Weiterreissfestigkeit [N/mm] | | 37.6 | 11.3 | 10.1 | 36.7 |
| Shore A | (7d NK) | 88 | 55 | 57 | 95 |
| (+ 7d 70/100) | | 61 | 24 | 37 | 66 |
| (+ 7d 100°C) | | 89 | 51 | 47 | 97 |

### Zusammensetzungen Z5 bis Z7:

Für jede Zusammensetzung wurde die in Tabelle 3 angegebene Menge Bisphenol A-Diglycidylether (in Gewichtsteilen) als Harz-Komponente eingesetzt. Weiterhin wurden die in Tabelle 3 angegebenen Inhaltsstoffe der Härter-Komponente in den angegebenen Mengen (in Gewichtsteilen) vermischt und unter Ausschluss von Feuchtigkeit aufbewahrt.

Anschliessend wurden die beiden Komponenten jeder Zusammensetzung mittels eines Zentrifugalmischers zu einer homogenen Flüssigkeit verarbeitet und diese unverzüglich folgendermassen geprüft:
Die **Gelierzeit** wurde wie für Zusammensetzung **Z1** angegeben geprüft.

Die mechanischen Eigenschaften wurden bestimmt, indem die vermischte Zusammensetzung in einer Silikonform für 24 h im Normklima gefolgt von 24 h bei 80 °C gefolgt von 3 Tagen im Normklima zu hantelförmigen Prüfkörpern (Dicke 2 mm, Länge 75 mm, Steglänge 30 mm, Stegbreite 4 mm) ausgehärtet wurde. Die ausgehärteten Prüfkörper wurden aus der Form gelöst und damit die **Zugfestigkeit,** die **Bruchdehnung** und das **E-Modul 1%** (bei 0.5 bis 0.1 % Dehnung) gemäss EN ISO 527 bei einer Zuggeschwindigkeit von 10 mm/min gemessen.

Die **Shore D** Härte wurde bestimmt nach DIN 53505 an zylindrischen Prüfkörpern (Durchmesser 20 mm, Dicke 5 mm), wobei die Härte jeweils nach 1 Tag (24h) und nach 2 Tagen Lagerung im Normklima gemessen wurde.

Die Resultate sind in Tabelle 3 angegeben.

Die mit "**(Ref.)**" bezeichneten Zusammensetzungen sind Vergleichsbeispiele.

**Tabelle 3: Zusammensetzung und Eigenschaften von Z5 bis Z7.**

| **Zusammensetzung** | | **Z5** | **Z6 (Ref.)** | **Z7 (Ref.)** |
|---|---|---|---|---|
| **Harz-Komponente:** | | | | |
| | BADGE | 188.0 | 188.0 | 188.0 |

| **Härter-Komponente:** | | | | |
|---|---|---|---|---|
| | Addukt **S1** | 144.5 | - | - |
| | Addukt **R1** | - | 144.5 | 99.8 |
| | MXDA | 17.0 | 20.5 | 24.7 |
| | K54 | 2.1 | 2.1 | 1.9 |
| Viskosität (5') [Pa·s] | | 21.4 | 11.8 | 14.1 |
| Gelierzeit [h:min] | | 1:30 | n.b. | n.b. |

| **1d NK + 1d 80°C:** | | | | |
|---|---|---|---|---|
| Zugfestigkeit [MPa] | | 39.7 | 25.2 | 41.2 |
| Bruchdehnung [%] | | 13 | 41 | 5.5 |
| E-Modul 1% [MPa] | | 1884 | 1105 | 1854 |
| Shore D | (1d NK) | 74 | 59 | 70 |
| | (2d NK) | 79 | 66 | 77 |

| | | | | |
|---|---|---|---|---|
| "n.b." steht für "nicht bestimmt" | | | | |

Aus der Tabelle 3 ist ersichtlich, dass die erfindungsgemässe Zusammensetzung **Z5** eine hohe Bruchdehnung von 13 % bei hoher Zugfestigkeit und hohem E-Modul aufwies. Die Vergleichs-Zusammensetzung **Z6** wies zwar eine sehr hohe Dehnbarkeit auf, die Härte (Shore D) und das E-Modul waren aber unerwünscht niedrig. Die Vergleichs-Zusammensetzung **Z7** mit einem geringeren Gehalt an Addukt **R1** wies zwar ein hohes E-Modul auf, die Bruchdehnung war aber deutlich geringer als bei **Z5.**

### Zusammensetzungen Z8 bis Z9: (Epoxidharz-Klebstoffe)

Es wurde eine Harz-Komponente hergestellt, indem die folgenden Inhaltsstoffe in den angegebenen Mengen (in Gewichtsteilen, GT) vermischt und unter Ausschluss von Feuchtigkeit aufbewahrt wurden: 40 GT Bisphenol A-Diglycidylether (Epikote^{®} 828 LVEL, von Westlake Epoxy), 16 GT Bisphenol F-Diglycidylether (Epikote^{®} 862, von Westlake Epoxy), 6 GT Butandiol-Diglycidylether (Araldite^{®} DY-D, von Huntsman), 20 GT Umsetzungsprodukt **U1,** hergestellt wie nachfolgend beschrieben, 1 GT 3-Glycidoxypropyltrimethoxysilan, 12 GT Füllstoffe und 5 GT pyrogene Kieselsäure.

Das **Umsetzungsprodukt U1** wurde hergestellt durch Umsetzung von 5687 g Polyetherdiol (Acclaim^{®} 4200, OH-Zahl 28 mg KOH/g, von Covestro), 712 g 4,4'-Diphenylmethandiisocyanat (Desmodur^{®} 44 MC L, von Covestro) bei 80 °C bis zu einem konstanten NCO-Gehalt von 1.9 Gew.%, gefolgt von der Umsetzung mit Cardanol (Cardolite^{®} NC-700, von Cardolite) während 2 h bei 80 °C, bis im FT-IR keine Isocyanatgruppen mehr nachweisbar waren.

Weiter wurde je eine Härter-Komponente hergestellt, indem die folgenden Inhaltsstoffe in den angegebenen Mengen (in Gewichtsteilen, GT) vermischt und unter Ausschluss von Feuchtigkeit aufbewahrt wurden: 14 GT modifiziertes Polyamin (Ancamine^{®} 2712M, AHEW 95 g/eq, von Evonik), 6 GT Polyetheramin (Jeffamine^{®} D-230, AHEW 60 g/eq, von Huntsman), 6 GT Phenalkamin (Cardolite^{®} LITE 2002, AHEW 104 g/eq, von Cardolite), 5 GT 2,4,6-Tris(dimethylaminomethyl)phenol (Ancamine^{®} K54, von Evonik), 44 GT Füllstoffe, 6 GT Pigmente, 4 GT pyrogene Kieselsäure und 15 GT des in der Tabelle 4 angegebenen Addukts bzw. eines kommerziellen Amin-funktionellen Butadien-Acrylonitril Copolymers (Hypro^{®} 1300X16 ATBN, AHEW 900 g/eq, von Huntsman), in der Tabelle 4 angegeben als "ATBN".

Anschliessend wurden die beiden Komponenten jeder Zusammensetzung im in Tabelle 4 angegebenen Mischungsverhältnis mittels eines Zentrifugalmischers zu einer homogenen Flüssigkeit verarbeitet und diese unverzüglich folgendermassen geprüft:
Als Mass für die Aushärtungsgeschwindigkeit wurde die **Zugscherfestigkeit** auf Stahl bestimmt, indem der Klebstoff zwischen zwei Stahlplättchen auf einer Klebefläche von 12.5 x 25 mm bei einer Klebstoffdicke von 0.3 mm appliziert wurde.

Nach einer Aushärtezeit von 5 h im Normklima wurde die Zugscherfestigkeit gemäss DIN EN 1465 mit einer Zuggeschwindigkeit von 10 mm/min bestimmt.

Die mechanischen Eigenschaften **Zugfestigkeit, Bruchdehnung** und **E-Modul** wurden bestimmt wie für Zusammensetzung **Z5** beschrieben, wobei die Aushärtung während 7 Tagen im Normklima erfolgte, die Schichtdicke der Prüfkörper 1 mm betrug, die Messung mit einer Zuggeschwindigkeit von 2 mm/min erfolgte und das **E-Modul 0.25%** (bei 0.05 bis 0.25 % Dehnung) bestimmt wurde.

Als Mass für die Schlagzähigkeit wurde der dynamische Widerstand in einer **Impact Peel** Prüfung gemäss ISO 11343 bestimmt. Dazu wurden Prüfkörper mit zwei verklebten elektrolytisch verzinkten DC04 Stahlplättchen 90 x 20 x 0.8 mm hergestellt mit einer Klebefläche von 20 x 30 mm bei einer Klebstoffdicke von 0.3 mm, ausgehärtet während 7 Tagen im Normklima. Die Messung des Schlagschälwiderstands (Impact Peel) erfolgte mit einer Schlaggeschwindigkeit von 2 m/s.

Die Resultate sind in Tabelle 4 angegeben.

Die mit **"(Ref.)"** bezeichnete Zusammensetzung **Z9** ist ein Vergleichsbeispiel.

**Tabelle 4: Zusammensetzung und Eigenschaften von Z8 bis Z9.**

| **Zusammensetzung** | | **Z8** | **Z9 (Ref)** |
|---|---|---|---|
| Eingesetzter Toughener | | Addukt **S2** | ATBN |
| Viskosität der Härter-Komponente (25°C) [Pa·s] | | 51.8 | 77.3 |
| Mischungsverhältnis¹ | | 100/102 | 100/113 |

| **5h NK:** | | | |
|---|---|---|---|
| Zugscherfestigkeit (Stahl) [MPa] | | 3.14 | 0.25 |

| **7d NK:** | | | |
|---|---|---|---|
| | Zugfestigkeit [MPa] | 26.2 | 25.0 |
| | Bruchdehnung [%] | 2.1 | 3.0 |
| | E-Modul 0.25% [MPa] | 2600 | 2080 |

| **7d NK:** Impact Peel | | | |
|---|---|---|---|
| Dynamic Resistance [N/mm] | | 23.7 | 24.8 |

| | | | |
|---|---|---|---|
| ¹ Harz-Komponente / Härter-Komponente (Gewicht) | | | |

Aus der Tabelle 4 ist ersichtlich, dass der erfindungsgemässe Klebstoff der Zusammensetzung **Z8** eine gute Verarbeitbarkeit (geringe Viskosität der Härter-Komponente), eine sehr schnelle Aushärtung und gute Haftung (bereits nach 5 Stunden im Normklima eine Zugscherfestigkeit von mehr als 3 MPa), eine hohe Festigkeit (Zugfestigkeit und E-Modul) und eine sehr hohe Schlagzähigkeit (Impact Peel) aufwies. Im Vergleich dazu zeigte die Vergleichs-Zusammensetzung **Z9 (Ref.)** mit einem kommerziellen aminfunktionellen ATBN eine höhere Viskosität und eine langsamere Aushärtung bei leicht geringerer Festigkeit und ähnlicher Schlagzähigkeit.

### Verwendung in Aldehydgruppen-haltiger Zusammensetzung:

### Zusammensetzungen Z10 bis Z11:

Für jede Zusammensetzung wurden die in Tabelle 5 angegebenen Inhaltsstoffe der ersten Komponente **K1** in den angegebenen Mengen (in Gewichtsteilen) mittels eines Zentrifugalmischers vermischt und in einem verschlossenen Gebinde aufbewahrt.

Ebenso wurden die in Tabelle 4 angegebenen Inhaltsstoffe der zweiten Komponente **K2** verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
**Gelierzeit, Zugfestigkeit, Bruchdehnung, E-Modul 5%** und **Shore A** wurden wie für Zusammensetzung **Z1** beschrieben geprüft.

Als Mass für die Haftfestigkeit wurde die **Zugscherfestigkeit** auf Glas bestimmt. Dazu wurden Verbundkörper hergestellt, indem zwei mit Isopropanol entfettete und mit Sika^{®} Aktivator-205 (von Sika Schweiz) vorbehandelte Glasplatten so verklebt wurden, dass die überlappende Klebeverbindung eine Dimension von 12 x 25 mm und eine Dicke von 4 mm aufwies und die Glasplatten an den Kopfenden vorstanden. Nach einer Lagerung der Verbundkörper während 7 d im Normklima wurde die Zugscherfestigkeit nach DIN EN 1465 bei einer Zuggeschwindigkeit von 20 mm/min geprüft. Anschliessend wurde das **Bruchbild** beurteilt, wobei "CF" für Kohäsivbruch bzw. cohesive failure auf 90 bis 100 % der Bruchfläche steht.

Die Resultate sind in Tabelle 5 angegeben.

**Tabelle 5: Zusammensetzung und Eigenschaften von Z10 bis Z11.**

| **Zusammensetzung** | | **Z10** | **Z11** |
|---|---|---|---|
| **Komponente K1:** | | | |
| | Aldehyd-funktionelles Polymer ¹ | 20.0 | 20.0 |
| | Diisodecylphthalat | 15.6 | 17.9 |
| | Aluminiumhydroxid (ATH) ² | 22.7 | 25.9 |
| | Russ ³ | 7.8 | 8.9 |

| **Komponente K2:** | | | |
|---|---|---|---|
| | Addukt | **S1** | **S3** |
| | | 4.2 | 7.8 |
| | 3-Mercaptopropyltrimethoxysilan | 0.4 | 0.4 |
| | p-Dodecylbenzolsulfonsäure | 0.2 | 0.2 |
| | Gelierzeit [min] | 10 | 35 |
| | Zugfestigkeit [MPa] | 2.1 | 2.3 |
| | Bruchdehnung [%] | 104 | 130 |
| | E-Modul 5% [MPa] | 3.5 | 3.3 |
| | E-Modul 50% [MPa] | 2.7 | 2.1 |
| | Shore A (7d NK) | 59 | 58 |
| | Zugscherfestigkeit (Glas) [MPa] | 1.2 | 1.2 |
| Bruchbild | | CF | CF |

| | | | |
|---|---|---|---|
| ¹ Aldehyd-Equivalentgewicht 2400 g/eq, aus der Umsetzung von 500 g **Polymer P3** mit 27.7 g 5-Hydroxymethylfurfural in Gegenwart von 0.1 g Dibutylzinndilaurat bei 110 °C, bis mittels IR-Spektroskopie keine Isocyanatgruppen mehr nachweisbar waren ² Martinal^{®} OL-104 (von Martinswerk) ³ Monarch^{®} 570 (von Cabot) | | | |

## Patentansprüche

1. Mercapto-funktionelles Addukt aus der Umsetzung von
- mindestens einem Mercaptan **M** mit mindestens drei Mercaptogruppen, mit
- mindestens einem Isocyanatgruppen-haltigen Polymer mit einem mittleren Molekulargewicht Mₙ von mindestens 1'000 g/mol,
in einem Verhältnis der Anzahl Mercaptogruppen zur Anzahl Isocyanatgruppen zu Beginn der Umsetzung von mindestens 4.

2. Addukt gemäss Anspruch 1, **dadurch gekennzeichnet, dass** das Verhältnis der Anzahl Mercaptogruppen zur Anzahl Isocyanatgruppen zu Beginn der Umsetzung im Bereich von 4 bis 30, bevorzugt 4.5 bis 20, mehr bevorzugt 5 bis 10, insbesondere 6 bis 9, liegt.

3. Addukt gemäss einem der Ansprüche 1 oder 2, **dadurch gekennzeichnet, dass** das Mercaptan **M** drei oder vier, insbesondere drei, Mercaptogruppen aufweist.

4. Addukt gemäss einem der Ansprüche 1 bis 3, **dadurch gekennzeichnet, dass** das Mercaptan **M** ein Mercapto-Equivalentgewicht von 45 bis 400 g/eq, bevorzugt 100 bis 300 g/eq, aufweist,
wobei das Mercaptan **M** insbesondere ausgewählt ist aus der Liste bestehend aus Glycerol-tris(2-mercaptoacetat), Glycerol-tris(3-mercaptopropionat), Glycerol-tris(3-mercaptobutylat), 1,1,1-Trimethylolpropan-tris(2-mercaptoace-tat), 1,1,1-Trimethylolpropan-tris(3-mercaptopropionat), 1,1,1-Trimethylolpropan-tris(3-mercaptobutyrat), Pentaerythritol-tris(2-mercaptoacetat), Pentaerythritol-tris(3-mercaptopropionat), Pentaerythritol-tris(3-mercaptobutyrat), Pentaerythritol-tetrakis(2-mercaptoacetat), Pentaerythritol-tetrakis(3-mercap-topropionat), Pentaerythritol-tetrakis(3-mercaptobutyrat), 3-Mercapto-2-hydroxypropylether von propoxyliertem Pentaerythritol mit einem mittleren Mercapto-Equivalentgewicht von 180 bis 400 g/eq, Tris(2-(2-mercaptoacetyl-oxy)ethyl)isocyanurat, Tris(2-(3-mercaptopropionyloxy)ethyl)isocyanurat und Tris(2-(3-mercaptobutanoyloxy)ethyl)isocyanurat.

5. Addukt gemäss einem der Ansprüche 1 bis 4, **dadurch gekennzeichnet, dass** das Mercaptan **M** Glycerol-tris(3-mercaptopropionat), 1,1,1-Trimethylolpropan-tris(2-mercaptoacetat), 1,1,1-Trimethylolpropan-tris(2-mercaptopro-pionat) oder 1,1,1-Trimethylolpropan-tris(3-mercaptobutyrat) ist, insbesondere 1,1,1-Trimethylolpropan-tris(2-mercaptopropionat).

6. Addukt gemäss einem der Ansprüche 1 bis 5, **dadurch gekennzeichnet, dass** das Isocyanatgruppen-haltige Polymer einen NCO-Gehalt von 1 bis 9 Gewichts-%, bevorzugt 1.5 bis 6.5 Gewichts-%, aufweist.

7. Addukt gemäss einem der Ansprüche 1 bis 6, **dadurch gekennzeichnet, dass** das Isocyanatgruppen-haltige Polymer ein Umsetzungsprodukt von mindestens einem monomeren Diisocyanat mit mindestens einem polymeren Polyol in einem molaren NCO/OH-Verhältnis von mindestens 1.5, bevorzugt mindestens 1.8, ist.

8. Addukt gemäss Anspruch 7, **dadurch gekennzeichnet, dass** das polymere Polyol ausgewählt ist aus der Liste bestehend aus Polyetherpolyolen, Polyesterpolyolen und Kohlenwasserstoffpolyolen.

9. Addukt gemäss einem der Ansprüche 1 bis 8, **dadurch gekennzeichnet, dass** das Addukt bezogen auf 100 Gewichtsteile Reaktionsprodukt aus Mercaptan **M** und Isocyanatgruppen-haltigem Polymer weniger als 5 Gewichtsteile, bevorzugt weniger als 1 Gewichtsteil, insbesondere weniger 0.5 Gewichtsteile, organische Lösemittel mit einem Siedepunkt bei Normaldruck von weniger als 250 °C enthält.

10. Addukt gemäss einem der Ansprüche 1 bis 9, **dadurch gekennzeichnet, dass** das Addukt eine Viskosität bei 20 °C von 1 bis 500 Pa·s, bevorzugt 2 bis 300 Pa·s, insbesondere 3 bis 250 Pa·s, aufweist, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹.

11. Addukt gemäss einem der Ansprüche 1 bis 10, **dadurch gekennzeichnet, dass** das Addukt ein mittleres Mercapto-Equivalentgewicht von 150 bis 1'500 g/eq, bevorzugt 200 bis 1'000 g/eq, aufweist.

12. Verwendung des Addukts gemäss einem der Ansprüche 1 bis 11 als Härter in einer härtbaren Zusammensetzung enthaltend Reaktivgruppen ausgewählt aus Epoxidgruppe, Isocyanatgruppe, Aldehydgruppe, Vinylgruppe, Allylgruppe, Acrylatgruppe und Methacrylatgruppe.

13. Epoxidharz-Zusammensetzung umfassend mindestens ein Epoxidharz und mindestens einen Härter für Epoxidharze enthaltend mindestens ein Addukt gemäss einem der Ansprüche 1 bis 11.

14. Epoxidharz-Zusammensetzung gemäss Anspruch 13, **dadurch gekennzeichnet, dass** der Härter zusätzlich mindestens ein Polyamin mit mindestens 3 Aminwasserstoffen enthält.

15. Epoxidharz-Zusammensetzung gemäss einem der Ansprüche 13 oder 14, **dadurch gekennzeichnet, dass** das Gewichtsverhältnis zwischen dem Mercapto-funktionellen Addukt und Epoxidharzen im Bereich von 5/95 bis 70/30, bevorzugt 7/93 bis 50/50, insbesondere 10/90 bis 35/65, liegt.
